# EUROPÄISCHE PATENTANMELDUNG

(11) **EP 0 986 211 A2**
(43) Veröffentlichungstag der Anmeldung: **15.03.2000**
(21) Anmeldenummer: 99114721.6
(22) Anmeldetag: 28.07.1999
(51) Int. Cl.: H04L 12/24, G06F 9/46

(54) **Verfahren zur Administration einer Telekommunikationsanlage**

(30) Priorität: 09.09.1998 DE 19841050
(71) Anmelder: ROBERT BOSCH GMBH, 70442 Stuttgart (DE)
(72) Erfinder: Little, Thomas, 81929 München (DE); Kobitzsch, Werner, 60435 Frankfurt (DE)

(57) **Zusammenfassung**

Die Erfindung betrifft ein Verfahren zur Administration einer Telekommunikationsanlage von einer Rechnerplattform (10) mit einem Web-Browser (18).

Es ist vorgesehen, daß der Zugriff und der Transfer von Hilfsprogrammen (20), die eine Steuerung der Eigenschaften der Telekommunikationsanlage (28) ermöglichen, über einen HTTP-Server (14, 15) unter Verwendung des Übertragungsprotokolls HTTP (16) erfolgt und daß nach dem Aktivieren der Hilfsprogramme (20) die Steuerung der Eigenschaften der Telekommunikationsanlage (28) unter Verwendung eines Übertragungsprotokolls CORBA (22) erfolgt.

## Beschreibung

Die Erfindung betrifft ein Verfahren zur Administration einer Telekommunikationsanlage mit den im Oberbegriff des Anspruchs 1 genannten Merkmalen.

### Stand der Technik

Es ist bekannt, die Administration von Telekommunikationsanlagen mittels geeigneter Software durchzuführen. Typische Administrationsaufgaben sind beispielsweise das Löschen beziehungsweise Eingeben neuer Teilnehmer oder das Aktivieren beziehungsweise Deaktivieren von Eigenschaften, wie beispielsweise teilnehmerbezogenen Einstellungen. Die Steuerung dieser Funktionen wird durch spezielle Hilfsprogramme ermöglicht. Infolge der zahlreichen, verschiedenartigen Ausführungsformen von Telekommunikationsanlagen müssen zahlreiche Hilfsprogramme zur Bewältigung dieser Aufgaben zur Verfügung gestellt werden. Die Anzahl der benötigten Hilfsprogramme wird zusätzlich durch das Vorliegen verschiedener Versionen systeminterner Steuerungssoftware in an sich baugleichen Telekommunikationsanlagen erhöht. Infolgedessen wurde bei den bisher bekannten Verfahren dem Administrator an einer zentralen Rechnereinheit entweder eine große Anzahl spezifischer Hilfsprogramme zur Verfügung gestellt, oder diese Hilfsprogramme wurden in sehr komplexen Programmen zusammengefaßt. Nachteilig hierbei ist, daß durch die Komplexität und/oder die große Anzahl der benötigten Hilfsprogramme die Anforderungen an die Hardware, wie beispielsweise Speicherplatz oder Prozessortyp, und an die Software sehr hoch sind, was zu einem erheblichen Kostenaufwand führt.

Die Administration von Telekommunikationsanlagen kann zum einen über Kabel- oder Telefonleitungen (Online) direkt erfolgen, zum anderen werden die zu bearbeitenden Daten der Telekommunikationsanlage auf einen geeigneten Datenträger gespeichert. Anschließend werden diese Daten in die dem Administrator zur Verfügung stehende Rechnereinheit eingespielt und bearbeitet (Offline). Im Falle einer Online-Administration stellen sich an die Software zusätzliche Anforderungen, da hier der Datentransfer mittels geeigneter Übertragungsprotokolle gesteuert wird. Dies führt bei den bisher bekannten Verfahren dazu, daß für die Offline- und Online-Administration unterschiedliche Hilfsprogramme entwickelt wurden, was zu einer weiteren Erhöhung der bereits obig geschilderten erhöhten Anforderungen an Hardware und Software führt.

Eine weitere Limitierung der bekannten Verfahren besteht darin, daß bei der Online-Administration die dem Administrator zur Verfügung stehende Rechnereinheit direkt mit den zu betreuenden Telekommunikationsanlagen verbunden ist. Infolge der verschiedenartigen Ausführungsformen von Telekommunikationsanlagen müssen zur Gewährleistung einer möglichst großen Kompatibilität unterschiedliche Übertragungsprotokolle genutzt werden.

Bekannt sind ferner Verfahren, die zur Bewältigung administrativer Aufgaben den Datentransfer über das Internet ermöglichen (beispielsweise das in der Zeitschrift ntz, Heft 7/1998, Seiten 28 bis 29 beschriebene Verfahren). Hierbei wird das Netzmanagement durch eine Reihe webgestützter Hilfsprogramme unterstützt. Von dem Terminal des Administrators wird über eine Konsolenschnittstelle ein Zugang zu einem Web-Server zur Verfügung gestellt. Im Zuge des durch spezielle Software ermöglichten Netzmanagements können dann Daten von den zu verwaltenden Netzelementen abgerufen, bearbeitet und gespeichert werden. Die benötigte Software besteht hierbei aus verschiedenen Komponenten, die beispielsweise die vorhandenen Ressourcen erfassen oder die Verfügbarkeit der zu verwaltenden Netzelemente ermöglichen. Die Komponenten und das Netz werden über einen Web-Browser verwaltet. In dem bekannten Verfahren stellen die zu verwaltenden Netzelemente passive Teilnehmer dar, das heißt, daß sie lediglich Daten über die eigenen Betriebszustände oder Hardwarekonfigurationen liefern, sich aber nicht aktiv, beispielsweise durch die Zurverfügungstellung geeigneter Software, an einer Optimierung des Datentransfers beteiligen.

### Vorteile der Erfindung

Das erfindungsgemäße Verfahren mit den im Anspruch 1 genannten Merkmalen bietet den Vorteil, daß die zur Administration von Telekommunikationsanlagen benötigten Hilfsprogramme in einer effizienteren Art und Weise zur Verfügung gestellt werden können und den Datentransfer unabhängig von der Ausführungsform der Telekommunikationsanlage ermöglichen. Weiterhin kann die Anzahl der benötigten Hilfsprogramme, die an der Rechnerplattform des Administrators gespeichert werden müssen, erheblich reduziert werden.

In dem erfindungsgemäßen Verfahren sind die spezifischen Hilfsprogramme, die eine Administration ermöglichen, direkt an der Telekommunikationsanlage gespeichert. Damit sind die Anforderungen an die Hardware der Rechnerplattform des Administrators deutlich verringert.

Der Datentransfer und/oder Softwaretransfer erfolgt unter Nutzung der bekannten und bewährten Übertragungsprotokolle HTTP oder CORBA. Diese Protokolle ermöglichen die Netzwerkfähigkeit und gewährleisten die Installation einer Benutzerplattform auf einer Rechnerplattform des Administrators. Der Datentransfer zwischen der Telekommunikationsanlage und der Rechnerplattform des Administrators erfolgt dabei in beide Richtungen über einen HTTP-Server. Die Rechnerplattform besitzt eine geeignete Schnittstelle und hat einen an das Betriebssystem angepaßten Web-Browser. Durch die gezeigte Anordnung lassen sich Standardprotokolle, die den Datentransfer ermöglichen, nutzen. Auf diese Weise ist das Übertragungsprotokoll, das durch die Hilfsprogramme genutzt wird, unabhängig von der gerade in Administration befindlichen Telekommunikationsanlage.

Durch die implementierte Benutzerplattform kann ein einheitlicher Zugang zu verschiedenartigen Telekommunikationsanlagen ermöglicht werden. Demnach kommt es zu einer erheblichen Minimierung der Einarbeitungszeiten, zu einer höheren Effizienz durch einen schnelleren Zugriff und zu einer Reduktion von Schulungskosten.

Der Gebrauch einer standardisierten Benutzerplattform basierend auf einem Web-Browser reduziert zusätzlich die Anforderungen an die Rechnerplattform des Administrators hinsichtlich der für die Hilfsprogramme benötigten Hardware- und Softwarekonfiguration. Es sind daher die technischen Anforderungen an die Rechnerplattform minimiert, und infolgedessen lassen sich die Rechnerplattformen kostengünstiger verwirklichen.

Die Nutzung des erfindungsgemäßen Verfahrens macht eine direkte Verbindung zwischen der Rechnerplattform und der Telekommunikationsanlage unnötig. Die Verbindung wird über das Internet ermöglicht. Dies führt einerseits zu einer Vereinfachung der Verbindung hinsichtlich der zu benutzenden Übertragungsprotokolle und reduziert andererseits die Kosten, die beispielsweise bei der Installation beziehungsweise Benutzung einer direkten Datenleitung entstehen würden.

Des weiteren läßt sich durch das erfindungsgemäße Verfahren die Anzahl der benötigten Hilfsprogramme reduzieren, indem identische Hilfsprogramme für die Offline- beziehungsweise Online-Administration benutzt werden. Für die Offline-Administration wird bei dem erfindungsgemäßen Verfahren auf einem zusätzlichen Server oder Datenträger das jeweils benötigte Hilfsprogramm zur Verfügung gestellt. Der Abruf des Hilfsprogramms erfolgt in gleicher Weise wie bei der Online-Administration. Es werden die gleichen Übertragungsprotokolle genutzt. Damit lassen sich die Hilfsprogramme für die Online- und Offline-Administration zusammenfassen, was zu einer Reduktion der Entwicklungskosten führt.

Weitere bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: ein Blockschaltbild für eine Online-Administration und
- Figur 2: ein Blockschaltbild für eine Offline-Administration.

### Beschreibung der Ausführungsbeispiele

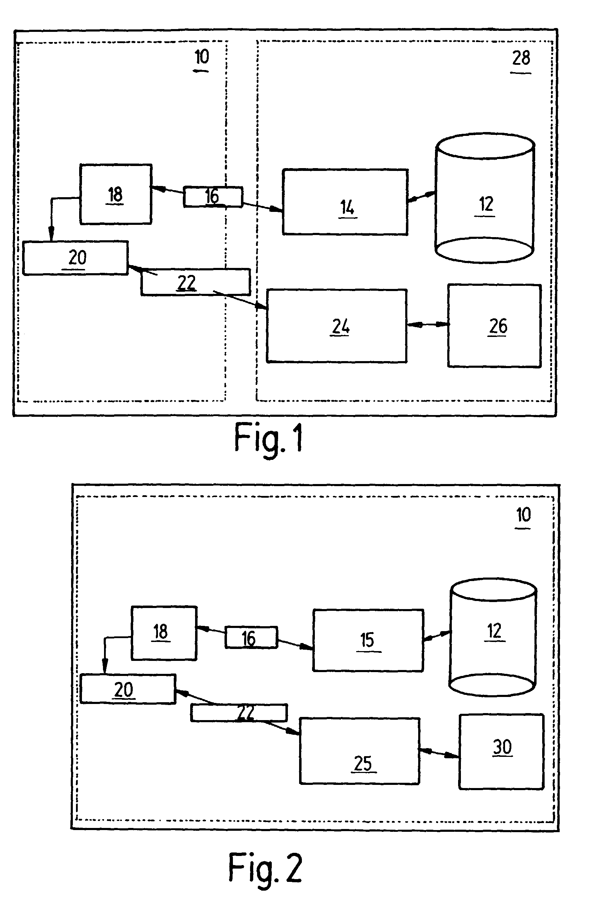

Figur 1 zeigt ein Blockschaltbild, in dem der Datenfluß während einer Online-Administration einer Telekommunikationsanlage 28 dargestellt wird. Ausgehend von einer Rechnerplattform 10, die als Terminal für den Administrator fungiert, wird unter Zuhilfenahme eines Web-Browsers 18 eine Verbindung zu der Telekommunikationsanlage 28 aufgebaut. Die Telekommunikationsanlage 28 beinhaltet zum einen einen HTTP-Server 14 und einen Datenträger 12. Auf den Datenträger 12 sind die spezifischen Hilfsprogramme zur Steuerung der Telekommunikationsanlage 28, ein Umsetzungsprogramm 24 zur Kommunikation zwischen Hilfsprogrammen und der Steuerungssoftware der Telekommunikationsanlage und die Steuerungssoftware 26 selbst installiert. Der Zugriff von der Rechnerplattform 10 auf den HTTP-Server 14 erfolgt unter dem Übertragungsprotokoll HTTP 16. Unter Verwendung desselben Protokolls werden dann die von dem Administrator gewünschten spezifischen Hilfsprogramme 20, die sich auf dem Datenträger 12 befinden, auf die Rechnerplattform 10 übertragen. Die übertragenen, spezifischen Hilfsprogramme 20 werden anschließend auf der Rechnerplattform 10 ausgeführt. Der Zugriff auf die Steuerungssoftware 26 der Telekommunikationsanlage 28 mittels der Hilfsprogramme 20 erfolgt unter Verwendung des Übertragungsprotokolls CORBA 22. Das Umsetzungsprogramm 24 wird hierbei eingesetzt, um das CORBA-Protokoll für Zugriff auf die Steuersoftware der Telekommunikationsanlage zu verwirklichen. Die Verwendung dieses Übertragungsprotokolls 22 ermöglicht es, zum einen den Sicherheitserfordernissen des Datentransfers gegen Fremdeingriff zu genügen und zum anderen erleichtert es die administrative Tätigkeit auf der Telekommunikationsanlage 28 durch die gewährleistete hohe Kompatibilität des Datentransfers.

Die Nutzung der Übertragungsprotokolle HTTP und CORBA für die Kommunikation zwischen der Telekommunikationsanlage 28 und der Rechnerplattform 10 ermöglicht es zudem, die Unterschiede zwischen verschiedenartigen Ausführungsformen von Telekommunikationsanlagen 28 bezüglich des genutzten Übertragungsprotokolls zu eliminieren. Zusätzlich ist auf diese Weise das Übertragungsprotokoll, das bei dem Zugriff der Hilfsprogramme 20 auf die Telekommunikationsanlage 28 genutzt wird, unabhängig von der zu betreuenden Anlage.

Die Bereitstellung der Hilfsprogramme 20 erfolgt wie bereits erläutert, direkt an der Telekommunikationsanlage 28 auf einen Datenträger 12. Damit ist gewährleistet, daß dem Administrator jeweils die benötigte Version und Ausführungsfunktion der Hilfsprogramme 20 zur Verfügung gestellt werden kann. Zur Optimierung der Übertragung der Hilfsprogramme 20 auf die Rechnerplattform 10, werden Autoinstallationsmechanismen genutzt, die jeweils eine ganze Gruppe von Hilfsprogrammen 20 übertragen können. Dies ist insofern wichtig, da der Administrator in der Praxis mehr als ein einzelnes Hilfsprogramm 20, das den Zugriff zu einer einzelnen administrativen Funktion gewährt, benötigt. Bekannte und bewährte Web-Browsers 18 ermöglichen einen solchen Mechanismus, wobei ein lokal installiertes Archiv, das die benötigten Hilfsprogramme 20 enthält, eine Alternative zu dem obig geschilderten Verfahren darstellt. Auf dem gezeigten Weg läßt sich auf diese Weise die Bereitstellung der benötigten Hilfsprogramme 20 optimieren.

Die Hilfsprogramme 20 werden in der Programmiersprache JAVA geschrieben. Das JAVA-Programm 20 wird auf der Rechnerplattform 10 ausgeführt. Die Verwendung dieser Programmiersprache ermöglicht es, eine hohe Portabilität zu gewährleisten. Die einzelnen Hilfsprogramme implementieren jeweils ganz spezifische administrative Funktionen, wie beispielsweise die Verwaltung von Abonnenten oder das Aktivieren beziehungsweise Deaktivieren von teilnehmerbezogenen Einstellungen. Dem Administrator wird infolgedessen ein Instrument zur Verfügung gestellt, das es ermöglicht, Daten anzuzeigen, sie zu modifizieren und sie anschließend wieder an die Telekommunikationsanlage 28 zu übertragen.

Der benötigte Web-Server 14 kann in einfacher Weise verwirklicht werden. Es muß lediglich der Zugriff eines Standard-Web-Browsers 18 ermöglicht werden und der Transfer von Daten und/oder Software unterstützt werden. Je nach Konfiguration der Hardware und/oder Software der Telekommunikationsanlage 28 ist der Web-Server in den Programmiersprachen C++ oder JAVA geschrieben.

Die Nutzung der standardisierten Übertragungsprotokolle 16, 22 ermöglicht es, unabhängig von den verschiedenen Ausführungsformen von Telekommunikationsanlagen 28 zu arbeiten. Daher können Hilfsprogramme 20, die die gleichen administrativen Funktionen gewährleisten, standardisiert werden. Infolgedessen ist der Entwicklungsaufwand bei der Verbesserung oder der Neuprogrammierung von Hilfsprogrammen 20 erheblich vereinfacht worden.

In der Figur 2 ist ein Blockschaltbild für eine Offline-Administration einer Telekommunikationsanlage dargestellt. Hierbei sind in der Rechnerplattform 10 zusätzlich ein Datenträger 12, ein Umsetzungsprogramm 25 und ein HTTP-Server 15 integriert. Auf dem Datenträger 12 wird die zu bearbeitende Datenbank 30 einer Telekommunikationsanlage abgespeichert und kann nach Bearbeitung wieder auf einen Datenträger, beispielsweise eine Diskette, abgespeichert werden und nachfolgend der zu betreuenden Telekommunikationsanlage zur Verfügung gestellt werden. Der Zugriff zu den benötigten Hilfsprogrammen 20 beziehungsweise auf die Datenbank 30 erfolgt analog dem bereits bei der Online-Administration gezeigten Verfahren. Dabei werden mittels eines Web-Browsers 18 über einen HTTP-Server 15 die Hilfsprogramme 20 unter dem Übertragungsprotokoll HTTP 16 transferiert. Nach Ausführung dieser JAVA-Programme 20 erfolgt der Zugriff auf die Datenbank 30, die auf dem Datenträger 12 angesiedelt ist, unter dem Übertragungsprotokoll CORBA 22. Das Umsetzungsprogramm 25 wird hierbei eingesetzt, um das CORBA-Protokoll für Zugriff auf die Datenbank zu verwirklichen. Die Nutzung der Übertragungsprotokolle 16, 22 ermöglicht, wie bei der Online-Administration, eine größtmögliche Unabhängigkeit von der spezifischen Hardware- und Software-Konfiguration einer zu betreuenden Telekommunikationsanlage. Eine separate Entwicklung der für die Offline- und Online-Administration benötigten Hilfsprogramme 20, wie sie nach den bekannten Verfahren erfolgen muß, entfällt. Zusätzlich lassen sich durch die Zusammenfassung der benötigten Hilfsprogramme für die Online- beziehungsweise Offline-Administration die Einarbeitungszeiten eines Benutzers deutlich reduzieren.

## Patentansprüche

1. Verfahren zur Administration einer Telekommunikationsanlage von einer Rechnerplattform (10) mit einem Web-Browser (18), **dadurch gekennzeichnet**, daß der zugriff und der Transfer von Hilfsprogrammen (20), die eine Steuerung der Eigenschaften der Telekommunikationsanlage (28) ermöglichen, über einen HTTP-Server (14, 15) unter Verwendung des Übertragungsprotokolls HTTP (16) erfolgt und daß nach dem Aktivieren der Hilfsprogramme (20) die Steuerung der Eigenschaften der Telekommunikationsanlage (28) unter Verwendung eines Übertragungsprotokolls CORBA (22) erfolgt.

2. Verfahren nach Anspruch 1, **dadurch gekennzeichnet**, daß die Hilfsprogramme (20), die eine Steuerung der Eigenschaften der Telekommunikationsanlage (28) ermöglichen, in der Programmiersprache JAVA geschrieben sind.

3. Verfahren nach einem der vorhergehenden Ansprüche, **dadurch gekennzeichnet**, daß der HTTP-Server (14) in den Programmiersprachen JAVA oder C++ geschrieben ist.

4. Verfahren nach einem der vorhergehenden Ansprüche, **dadurch gekennzeichnet**, daß die Verwendung der Übertragungsprotokolle (16, 22) eine Netzwerkfähigkeit ermöglicht.

5. Verfahren nach einem der vorhergehenden Ansprüche, **dadurch gekennzeichnet**, daß die Rechnerplattform (10) einen an das Betriebssystem angepaßten Web-Browser (18) aufweist.

6. Verfahren nach einem der vorhergehenden Ansprüche, **dadurch gekennzeichnet**, daß die Hilfsprogramme (20), die zur Administration einer Telekommunikationsanlage (28) benötigt werden, sowohl für die Offline-Administration als auch für die Online-Administration genutzt werden können.

7. Verfahren nach einem der vorhergehenden Ansprüche, **dadurch gekennzeichnet**, daß die zur Administration benötigten Hilfsprogramme (20), die sich auf einem Datenträger (12) befinden, die an der Telekommunikationsanlage (28) und/oder an der Rechnerplattform (10) angeordnet sind, über ein Autoinstallationsmechanismus dem Administrator zur Verfügung gestellt werden.

8. Verfahren nach einem der vorhergehenden Ansprüche, **dadurch gekennzeichnet**, daß bei der Online-Administration die Hilfsprogramme (20) auf einem Datenträger (12) der Telekommunikationsanlage (28) zur Verfügung gestellt werden.
